Europäisches Patentamt

European Patent Office

Office européen des brevets

(11) Numéro de publication : **0 499 531 A1**

# (12) DEMANDE DE BREVET EUROPEEN

(21) Numéro de dépôt : **92400363.5**

(22) Date de dépôt : **11.02.92**

(51) Int. Cl.⁵ : **F16C 1/14**

(30) Priorité : **13.02.91 FR 9101657**

(43) Date de publication de la demande :
**19.08.92 Bulletin 92/34**

(84) Etats contractants désignés :
**DE ES FR GB IT**

(71) Demandeur : **ACCO LA TELEDYNAMIQUE**
**80 rue Hippolyte Marinoni, Z.I. de Vaux le Pénil**
**F-77005 Melun (FR)**

(72) Inventeur : **Deligny, Jean**
**19 Villa du Bel Air**
**F-93700 Epinay sur Seine (FR)**

(74) Mandataire : **Lejet, Christian Michel**
**Bouju Derambure (Bugnion) S.A. 55, rue**
**Boissonade**
**F-75014 Paris (FR)**

(54) **Commande antivibration à câble flexible.**

(57)    L'invention concerne les commandes à câble flexible pour véhicule, notamment pour véhicule automobile. Elle concerne plus précisément une commande antivibration, à câble flexible pour véhicule, qui comporte un câble 1 et une gaine 2. Le câble 1 est destiné à être en traction entre un organe de commande 5 ou un organe commandé 7 et a deux extrêmités 11,12 respectivement reliées à l'organe de commande 5 ou un organe commandé 7, et comporte un élément élastique amortisseur 10 placé entre l'une des extrémités du câble 12 et l'un des organes commandé 7 ou de commande.

   Selon l'invention, l'élément amortisseur élastique 10 est destiné à être mis en traction.

FIG.1

EP 0 499 531 A1

L'invention concerne les commandes à câble flexible pour véhicule, notamment pour véhicule automobile.

Ces commandes comportent un câble d'actionnement reliant un organe commandé à un organe de commande.

Ce câble circule à l'intérieur d'une gaine qui est en appui entre deux points fixes.

Une traction, produite par l'organe de commande sur l'une des extrémités du câble est transmise à l'organe commandé et engendre son action.

De telles commandes sont utilisées par exemple dans les véhicules automobiles pour les mécanismes d'embrayage, commandes de frein, pour la commande de certaines boîtes de vitesse... On a déjà constaté que ce type de commande mécanique est susceptible de transmettre les vibrations du compartiment moteur à l'organe de commande. Différents dispositifs antivibration ont donc été proposés sans qu'aucun d'entre eux ne donne actuellement complètement satisfaction.

Le document FR-A-2 611 831 décrit un dispositif d'accrochage antivibration comportant un corps d'arrêt à l'extrémité du câble; disposé entre l'organe de commande et l'organe commandé. Cette disposition nécessite des pièces mécaniques relativement compliquées et n'apporte qu'un amortissement très partiel des vibrations. En effet, dès que le corps d'arrêt est en butée, toutes les vibrations sont transmises.

Par ailleurs, il a été proposé (FR-A-2 569 804) un dispositif amortisseur de vibrations pour commande mécanique comportant essentiellement un corps pesant, fixé par l'intermédiaire d'un insert tubulaire sur la gaine de la commande. Ce dispositif est très simple mais ne constitue qu'une faible limite à la transmission des vibrations.

L'objet de la présente invention est la réalisation d'un dispositif simple, peu coûteux et efficace d'amortissement des vibrations dont la présence ne rend pas le montage de la commande sur les véhicules compliqué.

A cet effet, il est proposé une commande antivibration à câble flexible, pour véhicule, comportant un câble et une gaine, la gaine ayant deux extrémités, chacune destinée à être au contact de deux points fixes du véhicule, le câble étant destiné à être en traction entre un organe de commande et un organe commandé et ayant deux extrémités respectivement reliées à l'organe de commande et à l'organe commandé, comportant un élément élastique, amortisseur destiné à être mis en traction et placé entre l'une des extrémités du câble et l'un des organes commandé ou de commande.

Selon l'invention, l'élément amortisseur élastique est constitué par au moins une bande d'un matériau élastique renforcé par au moins une toile.

Dans un mode de réalisation préféré, l'élément amortisseur élastique affecte la forme d'une bande plate et allongée, comportant deux ouvertures respectivement placées à chacune de ses extrémités. La première de ces ouvertures est destinée à assurer la liaison de l'amortisseur avec l'un des organes commandés ou de commande, la deuxième de ces ouvertures est reliée à l'une des extrémités du câble.

Selon un autre mode de réalisation préféré, l'élément amortisseur élastique a une forme cylindrique. La commande comporte une pièce métallique de forme allongée comportant à l'une de ses extrémités une chape permettant sa fixation sur l'un des organes de commande ou commandé et une deuxième extrémité, de révolution, comportant un épaulement. Cette commande comporte également un embout métallique comportant un épaulement, serti sur l'extrémité du câble. L'élément amortisseur, cylindrique, relie la pièce métallique et l'embout métallique et est serti sur l'un et sur l'autre.

Dans un autre mode de réalisation préféré, l'élément amortisseur élastique comporte une bande élastique plate allongée, comportant deux ouvertures, respectivement placées à chacune de ses extrémités et destinées à sa fixation sur l'un des organes de commande ou commandé et à replier cette bande, au moins partiellement sur elle-même, en lui donnant une forme en "U". Une extrémité du câble est fixée sur la bande élastique au fond du "U".

L'invention sera décrite plus en détail en référence aux dessins sur lesquels :

– La figure 1 est une représentation globale d'une commande à câble selon l'invention.

– La figure 2 est une représentation de l'élément amortisseur dans un premier mode de réalisation.

– La figure 3 est une représentation d'un élément amortisseur dans un deuxième mode de réalisation.

– La figure 4 est une représentation d'un élément amortisseur dans un troisième mode de réalisation.

– La figure 5 est une représentation d'un élément amortisseur dans un quatrième mode de réalisation.

– La figure 6 est une représentation d'un élément amortisseur dans un cinquième mode de réalisation.

– La figure 7 est une représentation d'un élément amortisseur dans un sixième mode de réalisation.

– La figure 8 est une représentation de l'amortisseur du sixième mode de réalisation vu de face.

– La figure 9 est une représentation de l'amortisseur du sixième mode de réalisation vu en coupe.

– La figure 10 est la représentation d'un élément amortisseur selon le sixième mode de réalisation, placé entre deux extrémités de câbles.

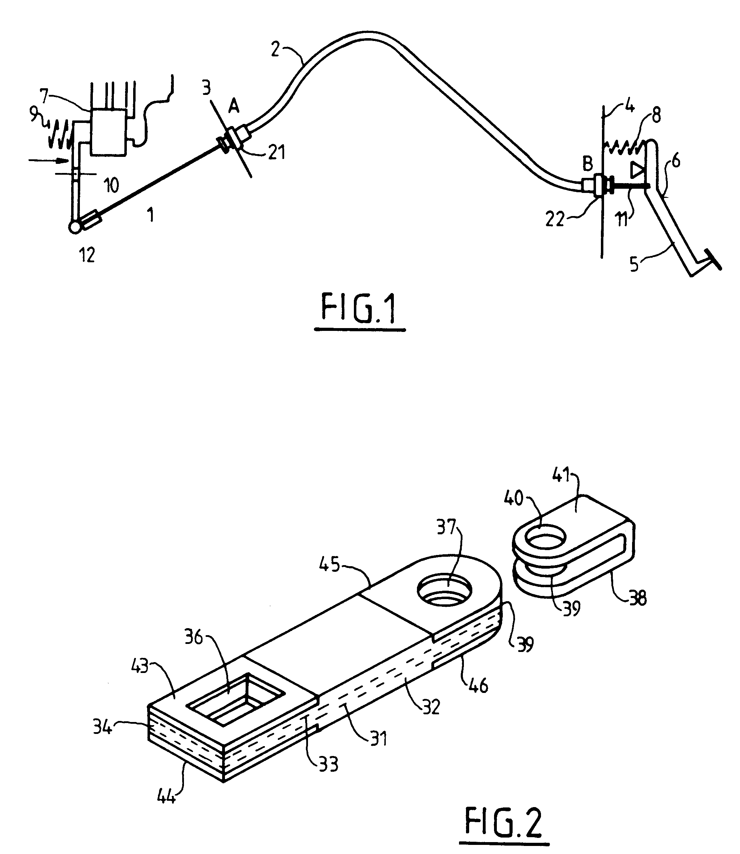

Sur la figure 1 est représentée une commande à câble flexible utilisée pour la commande d'un mécanisme d'embrayage de véhicule automobile.

Le câble 1 circule dans la gaine 2. La gaine 2 a deux extrémités respectivement 21, 22 fixées sur des parois 3, 4 fixes par rapport au châssis du véhicule.

La pédale 5 mobile autour de l'axe de rotation 6, lorsqu'elle est actionnée, éloigne l'extrémité 11 du câble 1 de la cloison 4 et produit donc une action de traction sur l'ensemble du câble 1. L'embrayage 7 est relié à la deuxième extrémité 12 du câble 1. Ainsi la traction exercée sur le câble 1 à partir du point 11 produit le déplacement du point 12 et donc actionne l'embrayage 7.

Le ressort 8 rappelant la pédale 5 d'une part et le ressort 9 rappelant l'embrayage en position de repos d'autre part exercent des forces de rappel de sens opposés et produisent donc une tension permanente sur le câble 1.

On comprend que dans un tel dispositif les vibrations que subit le mécanisme d'embrayage 7 sont transmises à la pédale 5.

Un élément amortisseur élastique 10 travaille en tension, c'est-à-dire qu'il comporte un élément élastique, par exemple en caoutchouc naturel ou en nitrile, qui est soumis à des forces tendant à son allongement lorsque la pédale ou commande 5 est actionnée ou même au repos par l'effet des ressorts 8 et 9.

L'élément élastique est avantageusement réalisé dans un matériau composite, la matière élastique (nitrile ou caoutchouc naturel) étant renforcée par une bande toilée. La présence d'une bande toilée permet d'éviter un allongement excessif de l'élément élastique lorsqu'un effort important est appliqué sur le câble 1. La perte de course susceptible d'être engendrée par la présence de l'élément amortisseur 10 est ainsi limitée.

Dans un premier mode de réalisation de l'invention représenté sur la figure 2, l'élément amortisseur élastique 10 affecte la forme d'une bande 31 plate allongée en nitrile renforcée par des bandes textiles 32, 33.

Cette bande textile a une forme allongée et chacune de ses extrémités 33, 34 comporte un trou ou ouverture 35, 36.

L'une de ces ouvertures, par exemple 35, constitue l'extrémité 12 de la commande et est destinée à recevoir un élément complémentaire de l'organe commandé 7.

L'autre ouverture 37 est destinée à être reliée à l'extrémité du câble 1. De préférence une chape 38 en forme de "U" est fixée sur l'extrémité du câble 1. La chape 38 comporte au niveau du fond du "U" un trou dans lequel coulisse le câble 1. Une bague sertie sur le câble permet d'éviter que celui-ci ne se dégage de la chape et assure la transmission d'une force de traction exercée sur le câble 1 à la chape 38. Sur les branches du "U", la chape 38 comporte deux trous 39, 40 qui permettent sa fixation sur l'ouverture 37 de l'élément élastique par l'intermédiaire d'une goupille 41.

Ainsi, lorsqu'une force de traction est exercée sur le câble 1 par la commande ou pédale 5, l'élément élastique 31 est lui-même soumis à cette force de traction. Il transmet cette force de traction et est susceptible de résister à des efforts importants et répétés.

D'autre part, lorsque l'organe commandé 7 est soumis à des vibrations, celles-ci sont amorties par l'élément élastique 31 et limite leur propagation par l'effet du câble 1.

Afin de renforcer la bande élastique plate 31, les trous 36 et 37 formés à ses extrémités 34 et 35 sont de préférence renforcés par des pièces métalliques. De préférence des pièces métalliques plates 43, 44, 45, 46 sont collées sur chacune des faces de la bande élastique plate 31 au niveau de ses extrémités. Elles comportent des ouvertures correspondant aux ouvertures 36 et 37.

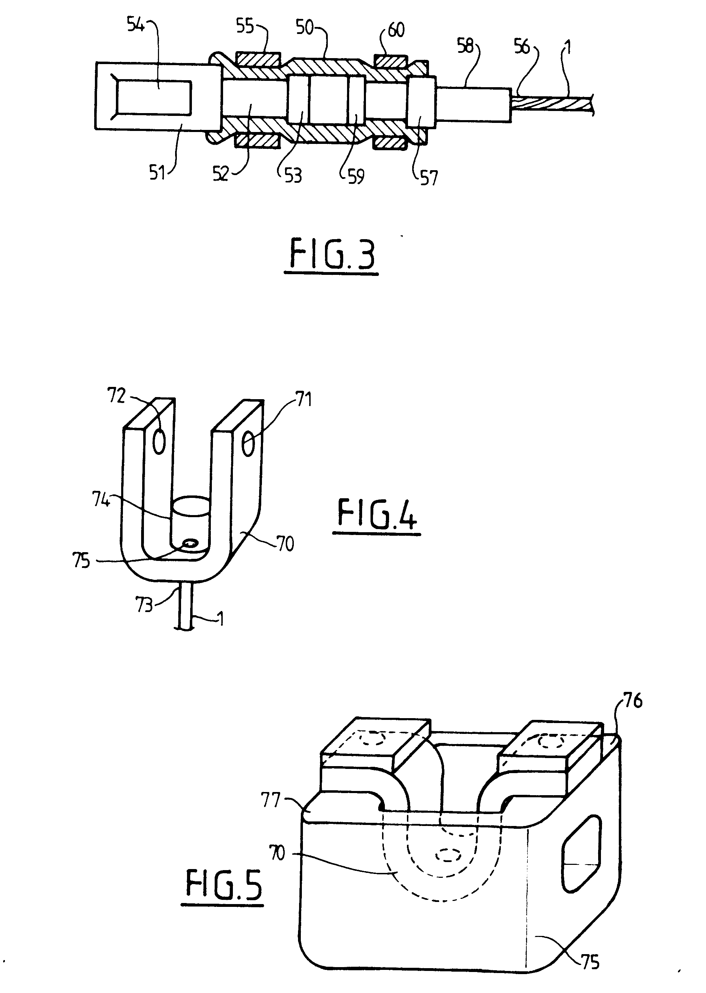

Dans un deuxième mode de réalisation représenté sur la figure 3, l'élément élastique 50 a une forme généralement cylindrique. Et comme dans l'exemple précédent, il est réalisé en caoutchouc naturel ou en nitrile et renforcé d'une bande textile.

La pièce 51 a une extrémité 52 présentant une symétrie de révolution et un épaulement 53. Elle comporte une chape 54 destinée à coopérer avec un élément correspondant de l'organe commandé 7.

Cette pièce métallique est engagée dans l'une des extrémités de l'élément élastique cylindrique 50. La bague de sertissage 55 assure la fixation de l'un à l'autre. L'extrémité 56 du câble 1 est reliée à un embout métallique 57 auquel il est serti par la virole 58. Cet embout 57 comporte un épaulement 59. L'embout 57 est engagé dans l'élément élastique cylindrique 50 et serti à celui-ci par la bague de sertissage 60. Ainsi un effort de traction transmis par le câble 1 transite par l'élément élastique cylindrique 50. L'élément 50 est à même de transmettre des efforts de traction intenses et répétés. Par contre les vibrations de l'organe commandé 7 sont amorties.

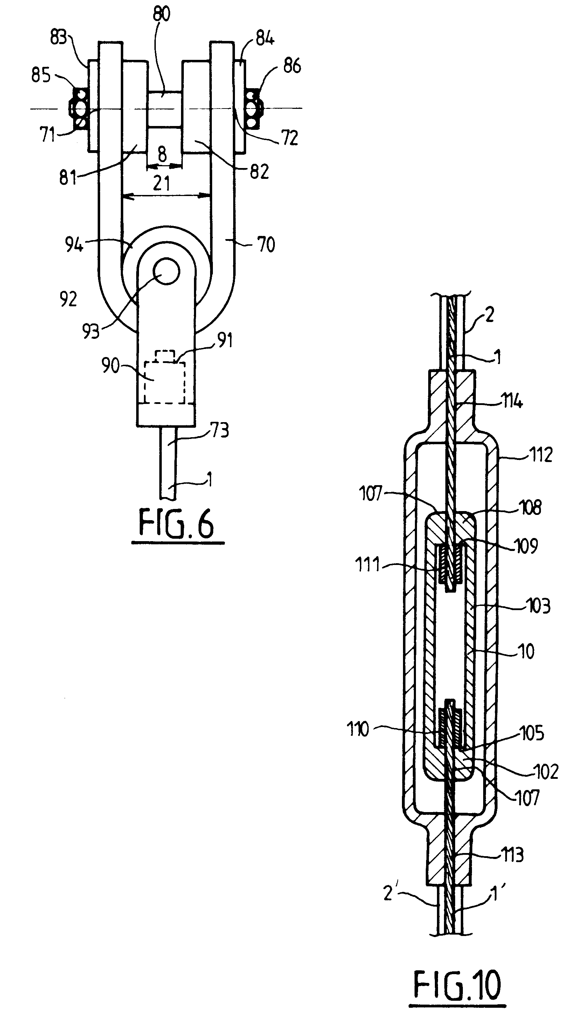

Dans un troisième mode de réalisation représenté à la figure 4, l'élément amortisseur élastique 10 comporte une bande élastique plate allongée 70 comportant deux ouvertures 71, 72 qui permettent la fixation de l'élément élastique 70 sur l'organe commandé 7.

L'élément plat 70 est replié sur lui-même de telle sorte qu'il prend une forme de "U", une extrémité 73 du câble 1 est fixée sur la bande élastique 70 en sa partie médiane, c'est-à-dire au fond du "U". Par exemple un trou 75 de passage est fait dans la bande élastique 70, ce trou est traversé par le câble 1 qui est muni d'une bague de sertissage 74 évitant qu'il ne se dégage du trou de passage 75.

Ainsi un effort de traction exercé sur le câble 1 est transmis à l'organe commandé par les deux branches du "U" formées par la bande élastique 70.

Les trous 72 et 71 peuvent être directement traversés par une goupille assurant la fixation de la bande élastique sur l'organe commandé.

Dans un autre mode de réalisation représenté à la figure 5, l'organe commandé 7 comporte une pièce 75 destinée à recevoir la bande élastique 70. Elle comporte des surfaces planes 76, 77 perpendiculaires à la direction de traction du câble 1 sur lesquelles les extrémités de la bande élastique 70 portant les ouvertures 72 et 71 reposent. Cette disposition permet une meilleure répartition des efforts auxquels est soumis la bande élastique 70 au point de liaison avec l'organe commandé.

Un cinquième mode de réalisation est représenté sur la figure 6, l'élément élastique 70 affecte la forme d'une bande plate et allongée, comportant à ses extrémités deux trous 71 et 72 traversés par un axe 80. Bien sûr, le repliement de la bande 70 sur elle-même lui donne une forme de "U". L'axe 80 porte des bagues 81, 82 placées face à face à l'intérieur du "U" et des rondelles 83 et 84 placées à l'extérieur de celui-ci. Les branches du "U" formées par la bande élastique 70 sont maintenues en position entre des bagues 81 et 82 et, respectivement, les rondelles 83, 84.

Les extrémités de l'axe 80 sont filetées et l'ensemble est fermé par les écrous 85, 86.

Le câble 1 a l'une de ses extrémités 73 fixée par l'intermédiaire d'une bague de sertissage 90 sur une chape 91. Cette chape rigide, de préférence métallique, a elle-même une forme de "U" dont l'extrémité des branches porte des trous 92 traversés par un axe 93 porteur d'un tourillon 94. Le tourillon 94 est engagé à l'intérieur du "U" formé par la bande élastique 70, ce qui permet la réalisation d'une liaison articulée entre la bande élastique 70 et le câble 1.

Les efforts de traction transmis par le câble 1 sont transmis par la bande élastique 70 à l'organe commandé 7 et les risques d'usure sont limités.

Les vibrations de l'organe commandé 7 sont fortement amorties par la bande élastique 70 et sont pratiquement insensibles au niveau de la commande ou pédale 5.

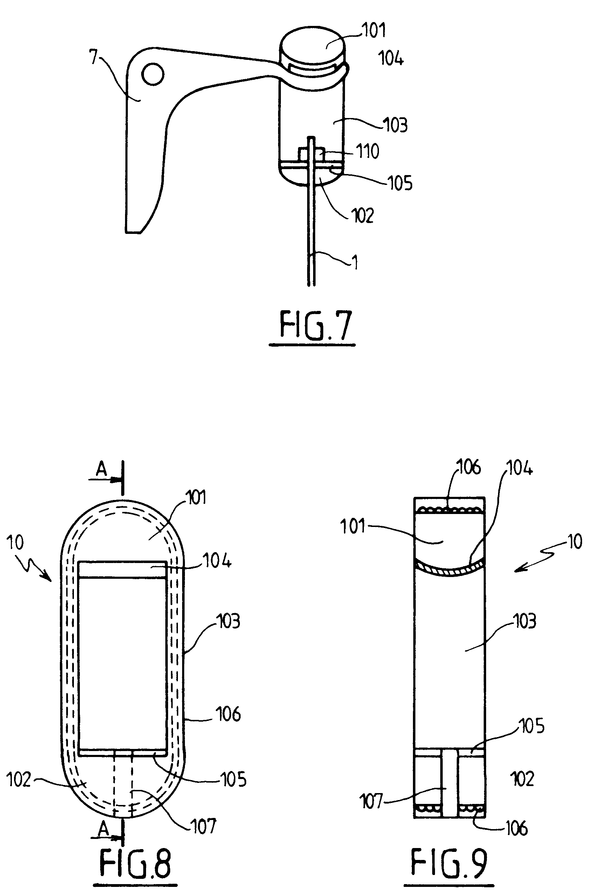

Un sixième mode de réalisation est maintenant décrit en référence aux figures 7, 8 et 9.

L'élément amortisseur de vibrations 10 affecte la forme d'une bande 103 fermée sur elle-même présentant donc deux extrémités arrondies. A chacune des extrémités sont placés des inserts respectivement 101 et 102.

L'amortisseur est réalisé en élastomère, aussi bien en ce qui concerne les bandes élastiques 103 que les inserts 101 et 102. Ils sont fabriqués de préférence par moulage.

L'amortisseur élastique 10 est renforcé par des toiles 106 fermées sur elles-mêmes et essentiellement placées à la périphérie de celui-ci.

Ces toiles sont de préférence des toiles de polyester qui, à titre d'exemple, peuvent être de mille deniers et avoir une densité d'environ cent grammes par m2.

Les zones de l'amortisseur élastique destinées à être en contact avec les éléments extérieurs (câble 1 ou organe de commande ou commandé 7) sont renforcées par des éléments métalliques 104, 105.

L'amortisseur de vibrations 10 peut être directement en contact avec l'organe commandé 7 tel que représenté sur la figure 7, à son autre extrémité il est relié au câble 1. A cet effet il comporte un trou 107 constituant le passage du câble 1 et le câble 1 porte une barye sertie 110 qui assure sa fixation sur l'élément amortisseur et permet qu'une force de traction lui soit appliquées par l'intermédiaire du câble 1.

Les toiles en polyester 106 assurent une bonne tenue dimensionnelle d'amortisseur de vibrations 10 lorsqu'une force de traction importante lui est appliquée par l'intermédiaire du câble 1, tout en permettant à l'élastomère de jouer son rôle amortisseur et d'éviter la propagation des vibrations, par exemple des vibrations acoustiques.

Dans la description qui a été faite jusqu'à présent, l'amortisseur de vibrations 10 a été situé à l'extrémité de la commande, au voisinage de l'organe commandé 9.

On comprend aisément que sans sortir du cadre de l'invention, cet amortisseur peut être placé à l'autre extrémité de la commande à câble flexible, au voisinage de la pédale ou commande 5. Il est même possible de l'interposer en un point quelconque sur le parcours du câble 1.

Une telle réalisation a été représentée sur la figure 10. Sur cette figure l'amortisseur de vibrations est conforme au sixième mode de réalisation, mais il est placé entre deux extrémités de câble 1 et 1'. C'est la raison pour laquelle il est symétrique, présentant une bande élastique 103 fermée sur elle-même, deux inserts 108 et 102 placés à chacune de ses extrémités. A ses extrémités il comporte des trous 107 permettant le passage des câbles. Ces câbles sont immobilisés à l'intérieur de l'amortisseur de vibrations par les bagues de sertissage 110, 111. De préférence et afin de protéger l'amortisseur de vibrations 10, celui-ci est placé dans un boîtier 112 et reliant les gaines 2 et 2'. Le boîtier 112 comporte des passages de câbles 113, 114.

Toutefois, des positions extrêmes paraissent être les mieux adaptées.

Par ailleurs, afin d'augmenter l'efficacité du dispositif, plusieurs éléments élastiques amortisseurs peuvent être disposés sur le parcours du câble 1.

Afin d'éviter la propagation des vibrations par la gaine 2 au câble 1, celle-ci peut être isolée des points fixes ou parois 3, 4 par l'intermédiaire de bagues élastiques d'amortissement, connues en elles-mêmes et travaillant en compression.

## Revendications

1. Commande antivibration, à câble flexible pour véhicule, comportant un câble (1) et une gaine (2), la gaine ayant deux extrémités (21, 22) , chacune destinée à être au contact de deux points fixes ( 3, 4 ) du véhicule, le câble (1) étant destiné à être en traction entre un organe de commande (5) et un organe commandé (7) et ayant deux extrémités (11, 12) respectivement reliées à l'organe de commande (5) et à un organe commandé (7), comportant un élément élastique amortisseur (10) destiné à être mis en traction et placé entre l'une des extrémités du câble (12) et l'un des organes commandé (7) ou de commande (5) caractérisé en ce que l'élément amortisseur élastique (10) est constitué par au moins une bande d'un matériau élastique (31) renforcé par au moins une toile (32, 33).

2. Commande antivibration à câble flexible pour véhicule selon la revendication 1, caractérisée en ce que l'élément amortisseur élastique (10) affecte la forme d'une bande (31) plate et allongée, comportant deux ouvertures (36, 37) , respectivement placée à chacune de ses extrémités, la première de ces ouvertures (36) étant destinée à assurer la liaison de l'amortisseur avec l'un des organes de commande ou commandé, la deuxième de ces ouvertures (37) étant reliée à l'une des extrémités du câble (1).

3. Commande antivibration, à câble flexible pour véhicule selon la revendication 2, caractérisée en ce que l'élément amortisseur élastique (10) comporte des pièces métalliques (43, 46) entourant ses ouvertures et collées sur les faces de la bande élastique plate (31).

4. Commande antivibration, à câble flexible pour véhicule selon la revendication 1, caractérisée en ce que l'élément amortisseur élastique (10) a une forme cylindrique.

5. Commande antivibration, à câble flexible pour véhicule selon la revendication 4, caractérisée en ce qu'elle comporte une pièce métallique (51) de forme allongée comportant à l'une de ses extrémités une chape (54) permettant sa fixation sur l'un des organes de commande ou commandé et une deuxième extrémité de révolution (52) comportant un épaulement, un embout (57) métallique serti sur l'extrémité du câble, l'élément amortisseur (10) reliant ladite pièce métallique (51) et ledit embout métallique (57) et étant serti sur l'un par l'une de ses extrémités et sur l'autre par l'autre de ses extrémités.

6. Commande antivibration, à câble flexible pour véhicule selon la revendication 1, caractérisée en ce que l'élément amortisseur élastique (10) comporte une bande élastique plate (70), allongée comportant deux ouvertures (71, 72) respectivement placées à chacune de ses extrémités et destinées à sa fixation sur l'un des organes de commande ou commandé et à replier cette bande (70) au moins partiellement sur elle-même en lui donnant une forme en "U", une extrémité (73) du câble (1) étant fixée sur la bande élastique au fond du "U".

7. Commande antivibration, à câble flexible pour véhicule selon la revendication 6, caractérisée en ce que l'extrémité (73) du câble fixée sur la bande élastique (70) traverse celle-ci et comporte une bague sertie (75) assurant la liaison entre le câble et la bande élastique.

8. Commande antivibration, à câble flexible pour véhicule selon les revendications 6 et 7, caractérisée en ce que les ouvertures (71, 72) de la bande élastique (70) sont traversées par un axe (80) repliant cette bande (70) sur elle-même et lui donnant une forme de "U", ledit axe (80) étant destiné à être fixé sur l'un des organes de commande ou commandé.

9. Commande antivibration, à câble flexible pour véhicule selon les revendications 6 à 8, caractérisée en ce qu'elle comporte une chape (91) sertie sur l'extrémité du câble (73), portant un tourillon (94) placé au fond du "U" de la bande élastique (70) et assurant une liaison articulée entre la bande élastique (70) et le câble (1).

10. Commande antivibration, à câble flexible pour véhicule selon les revendications 1 à 9, caractérisée en ce que chacune des extrémités du câble (1) comporte un élément élastique amortisseur (10).

11. Commande antivibration, à câble flexible pour véhicule selon la revendication 1, caractérisée en ce qu'elle comporte une bande élastique plate (103) refermée sur elle-même, et deux inserts (101, 102) placés à ses extrémités et assurant la liaison de l'amortisseur respectivement avec le câble (1) et avec l'un des organes commandé ou de commande.

12. Commande antivibration, à câble flexible pour véhicule selon la revendication 11, caractérisée en ce qu'elle comporte des renforts métalliques (104, 105).

13. Commande antivibration, à câble flexible pour véhicule selon la revendication 11 ou 12, caractérisée en ce qu'elle est symétrique et destinée à relier deux extrémités de câbles (1, 1').

FIG.1

FIG.2

## FIG.3

## FIG.4

## FIG.5

FIG.6

FIG.10

FIG.7

FIG.8

FIG.9

Office européen
des brevets

# RAPPORT DE RECHERCHE EUROPEENNE

Numero de la demande

EP    92 40 0363

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 060 808 (AUTOMOTIVE PRODUCTS) <br> * figure 2 * <br> --- | 1,2,3,13 | F16C1/14 |
| Y | BE-A-416 615 (HARDY) <br> * figures 1,2 * <br> --- | 1,2,3,13 | |
| Y | US-A-2 073 852 (RADFORD) <br> * le document en entier * <br> --- | 1,2,3,13 | |
| D,A | FR-A-2 611 831 (SILA TELECOMANDI) <br> * le document en entier * <br> --- | 1 | |
| A | DE-A-3 247 115 (KAMMERER) <br> --- | | |
| A | US-A-4 694 705 (FRANKHOUSEN) <br> --- | | |
| A | EP-A-0 373 812 (BABCOCK INDUSTRIES) <br> ----- | | |
| | | | **DOMAINES TECHNIQUES RECHERCHES (Int. Cl.5)** <br><br> F16C <br> F16D <br> F16G <br> B60D <br> G05G |

Le présent rapport a été établi pour toutes les revendications

| Lieu de la recherche | Date d'achèvement de la recherche | Examinateur |
|---|---|---|
| LA HAYE | 19 MAI 1992 | ORTHLIEB |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
-----------------------------------------------------
& : membre de la même famille, document correspondant

EPO FORM 1503 03.82 (P0402)